# EUROPÄISCHE PATENTANMELDUNG

(11) **EP 1 336 534 A1**
(43) Veröffentlichungstag der Anmeldung: **20.08.2003**
(21) Anmeldenummer: 03001696.8
(22) Anmeldetag: 27.01.2003
(51) Int. Cl.: B60P 1/44

(54) **Abrollsicherung**

(30) Priorität: 19.02.2002 DE 10207012
(71) Anmelder: Peter Maier Leichtbau GmbH, 78224 Singen (DE)
(72) Erfinder: Maier, Peter, 78256 Steisslingen (DE); Kmet, Branislav, 78351 Bodman-Ludwigshafen (DE)
(74) Vertreter: Weiss, Peter, Dr.

(57) **Zusammenfassung**

Bei einer Vorrichtung zum Sichern von Gegenständen auf einer Tragfläche, insbesondere einer Ladebordwand (1), mit zumindest zwei um eine Welle (12) drehbaren Sicherungsklappen (19) soll den Sicherungsklappen (19) eine Einrichtung zugeordnet sein, welche das Schliessen einer einzelnen Sicherungsklappe (19) unabhängig von der anderen Sicherungsklappe (19) ermöglicht.

## Beschreibung

Die vorliegende Erfindung bezieht sich auf eine Vorrichtung zum Sichern von Gegenständen auf einer Tragfläche, insbesondere einer Ladebordwand, mit zumindest zwei um eine Welle drehbaren Sicherungsklappen.

Derartige Vorrichtungen sind bereits in vielfältiger Form und Ausführung bekannt und gebräuchlich. Beispielsweise ist in der EP 0 271 441 eine Ladebordwand beschrieben, welcher eine Abrollsicherung in Form eines Klappenprofils zugeordnet ist. Das Klappenprofil befindet sich in Öffnungslage in einem etwa 45°-Winkel mit der Oberfläche der Ladebordwand. Ferner wird durch die Öffnung des Klappenprofils eine kleine Mulde ausgebildet, welche der Aufnahme eines Rades, einer Rolle od. dgl. eines Gegenstandes, wie beispielsweise eines Containers, dienen soll.

Diese Ladebordwand weist jedoch den Nachteil auf, dass alle Klappenprofile auf einmal nach oben geklappt werden. Sollen sie wieder geschlossen werden, so ist auch dies nur in ihrer Gesamtheit möglich. Ein Schliessen von nur einzelnen Sicherungsklappen ist also nicht möglich.

Desweiteren öffnen die Klappenprofile nur um etwa 45°. Der Gegenstand, der gesichert werden soll, lehnt sich dann nur gegen die Vorderkante des Klappenprofils und ist nicht sehr gut gesichert. Auch die Sicherung durch die kleine Mulde ist nicht gegeben, denn durch die nur etwa 45° betragende Öffnung kann das Rad des Gegenstandes nicht in die Mulde einfahren.

In der DE 299 12 961 wird ebenfalls eine Ladebordwand mit einer Sicherungsklappe beschrieben. Hierbei werden durch die Betätigung eines Schubriegels Rastelemente freigegeben. Dadurch wirken Federelemente und lassen die Sicherungsklappe in ihre Öffnungslage drehen.

Der Nachteil besteht darin, dass sich auch hier die Sicherungsklappe nur um etwa 45° öffnet. Somit lehnt sich der zu sichernde Gegenstand erneut nur gegen die Vorderkante des Sicherungsprofils und kann kaum in die Mulde einfahren, welche sich durch die Öffnung der Sicherungsklappe bildet. Der Gegenstand kann nicht ausreichend gesichert werden.

Desweiteren ist die Möglichkeit des Schliessens einzelner Sicherungsklappen nicht gegeben.

Andere bisher bekannte Vorrichtungen sind oftmals umständlich in der Herstellung und Bedienung. Sie sind mit sehr vielen Bauteilen bestückt, was die Zusammensetzung der Ladebordwand zeit- und kostenintensiv werden lässt.

Aufgabe der vorliegenden Erfindung ist es, eine Vorrichtung zu schaffen, welche die oben genannten Nachteile vermeidet und vielfältigeren Anforderungen Rechnung trägt.

Zur Lösung dieser Aufgabe führt, dass den Sicherungsklappen eine Einrichtung zugeordnet ist, welche das Schliessen einer einzelnen Sicherungsklappe unabhängig von der anderen Sicherungsklappe ermöglicht.

Dabei werden die Sicherungsklappen durch die Welle in die Öffnungslage gedreht. Dann aber können die Sicherungsklappen unabhängig von der Welle in der Öffnungslage gehalten werden. Dies wird durch eine Rasteinrichtung ermöglicht. Dabei ist eine Nut oder Mulde an der Sicherungsklappe vorgesehen, welche in der Öffnungslage der Sicherungsklappe mit einer Querleiste oder Kugel im Boden des Hohlprofils zusammenwirkt. Die Anordnung kann jedoch auch umgedreht verwirklicht werden. Es ist ferner möglich, anderen bekannte Mitteln, wie beispielsweise Riegel, Federn usw., zu verwenden.

Zum Öffnen der Sicherungsklappe ist ein Arm unter einer jeweiligen Sicherungsklappe vorgesehen. Der Arm ist bevorzugt an der gleichen Welle angeordnet wie die Sicherungsklappe. Der Arm kann, nachdem die Sicherungsklappe aufgestellt ist, wieder in Schliesslage klappen und auf einem Einsatz in einem Hohlprofil der Tragfläche zu liegen kommen. Dadurch sind die einzelnen Sicherungsklappen frei und können einzeln geschlossen werden, wenn sie nicht gebraucht werden sollten.

Ist nur ein Arm vorgesehen, kann dieser sich auch quer über die gesamte Breite der Sicherungsklappe erstrecken oder nur über einen kleinen Bereich. Anstelle von nur einem Arm unter der Sicherungsklappe können auch mehrere Arme vorgesehen sein. Alle Möglichkeiten sollen von der vorliegenden Erfindung umfasst sein.

Der Arm kann weiterhin an einer einzigen Welle angeordnet sein oder an einer weiteren Welle, welche dann beispielsweise in der Hauptwelle geführt werden kann.

Der Welle ist ein Hebel zugeordnet, mittels welchem sich die Welle drehen lässt.

Mit der vorliegenden Erfindung ist die Möglichkeit gegeben, je nach Wunsch und Notwendigkeit, einzelne Sicherungsklappen zu schliessen und andere Sicherungsklappen in der geöffneten Stellung zu belassen.

Ferner können Gegenstände, welche auf der Tragfläche gesichert werden sollen, in eine Mulde der Oberfläche der Tragfläche einfahren, welche sich bildet, wenn die Sicherungsklappen nach oben klappen. Dort wird der Gegenstand von dem Einsatz und dem darauf aufliegenden Arm getragen. Gleichzeitig verringern sie die Tiefe der Mulde, damit ein Umkippen des Gegenstandes vermieden werden kann, wenn nur ein Rad des Gegenstandes in die Mulde einfährt.

Ferner lassen sich die Sicherungsklappen um etwa 90° öffnen. Das bedeutet, dass die Gegenstände mit der gesamten Breite der Sicherungsklappen und zusätzlich noch durch die Mulde gesichert werden. Ein Abrollen der Gegenstände von der Tragfläche ist jetzt nahezu unmöglich.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf einen Teil einer Ladebordwand mit einer Abrollsicherung gemäss der vorliegenden Erfindung;
Figur 2 einen Längsschnitt durch die Ladebordwand in Figur 1 entlang der Linie II - II mit strichpunktiert dargestellter Sicherungsklappe in geöffnetem Zustand;
Figur 3 einen Längsschnitt durch die Ladebordwand in Figur 1 entlang der Linie III - III;
Figur 4 einen Längsschnitt durch die Ladebordwand in Figur 1 entlang der Linie IV - IV.

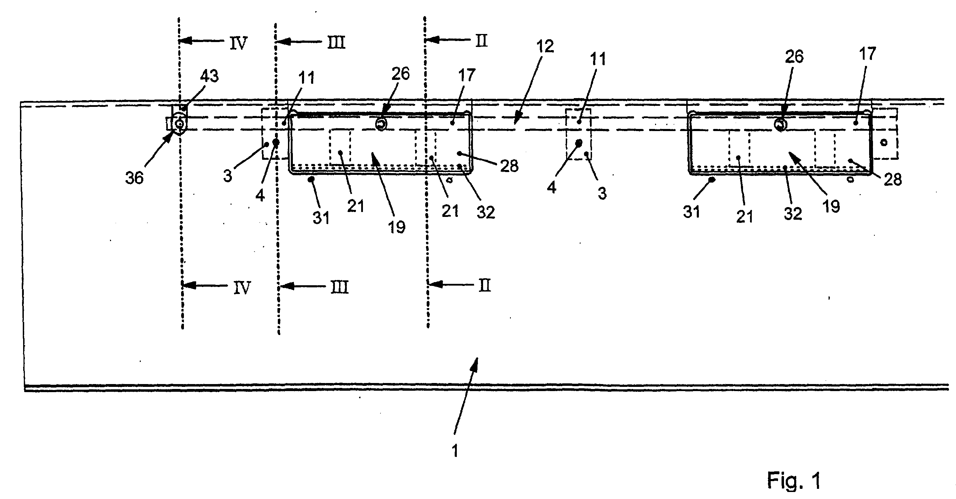

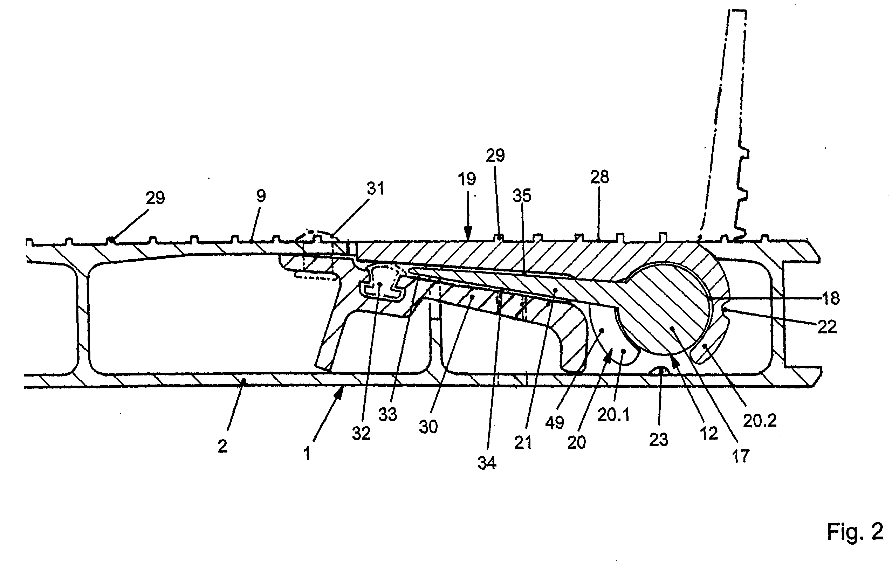

Eine Ladebordwand 1, wie in Figur 1 dargestellt, besteht bevorzugt aus mehreren zusammengeschweissten, stranggepressten Hohlprofilen 2, von welchen in den Figuren 2 bis 4 nur jeweils eines gezeigt ist.

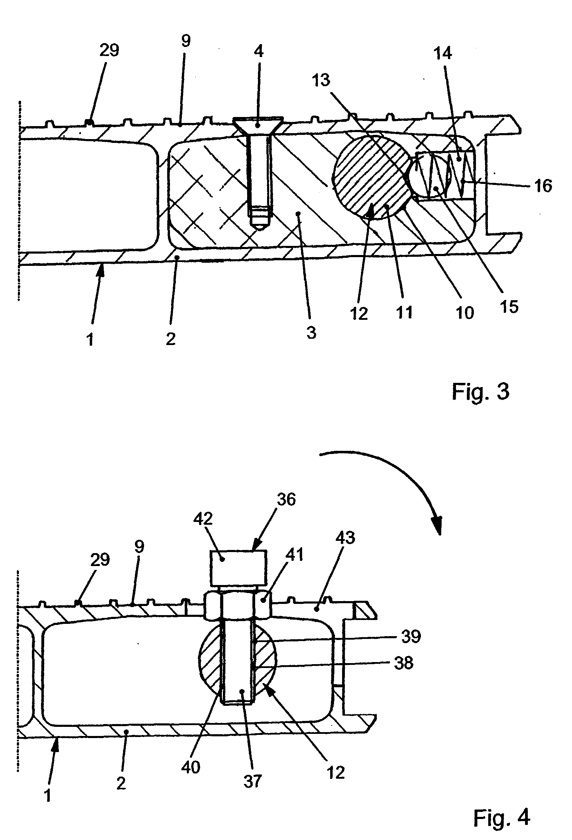

Einzelne Hohlprofile 2 weisen, wie in Figur 3 ersichtlich, einen Einsatz 3 auf. Dieser Einsatz 3 ist mittels einer Schraube 4 in dem Hohlprofil 2 befestigt.

Der Einsatz 3 weist eine Querbohrung 10 auf, in welcher ein Abschnitt 11 einer Welle 12 drehbar gelagert ist. Im Bereich diesen Abschnitts 11 weist die Welle 12 eine Rastausnehmung 13 auf. Wie in Figur 3 ersichtlich, schliesst an die Rastausnehmung 13 eine Kugelaufnahme 14 an, in welcher eine Kugel 15 und eine sich gegen die Kugel 15 abstützende Feder 16 angeordnet sind. Die federgelagerte Kugel 15 rastet dabei in die Rastausnehmung 13 der Welle 12 ein.

Ein weiterer Abschnitt 17 der Welle 12 ist, wie in Figur 2 ersichtlich, in einer Ausnehmung 18 an einer Sicherungsklappe 19 gelagert. Die Ausnehmung 18 wird von einem handartigen Griffstück 20 gebildet, welches einends der Sicherungsklappe 19 angeformt ist, den Wellenabschnitt 17 aber mit zwei Griffschenkeln 20.1 und 20.2 nicht vollständig umschliesst.

In dem Griffschenkel 20.2 ist weiterhin ein Teil einer Rasteinrichtung in Form einer Nut 22 oder Mulde vorgesehen, welche mit einer entsprechenden federgelagerten Querleiste 23 oder Kugel in dem Boden des Hohlprofils 2 zusammenwirkt, wenn die Sicherungsklappe 19 nach oben geklappt wird. Die Sicherungsklappe 19 kann so nicht von alleine wieder in ihre Schliesslage klappen.

In dem Bereich unter der Sicherungsklappe 19 ragen von dem Wellenabschnitt 17 ein oder mehrere Arme 21 ab, welche fest mit diesem verbunden ist. Damit sich die Arme 21 gegenüber der Sicherungsklappe 19 drehen lassen, muss der Griffschenkel 20.1 jeweils eine Ausnehmung 49 aufweisen.

In geschlossenem Zustand bildet eine Oberfläche 28 der Sicherungsklappe 19 einen Ebene mit einer Oberfläche 9 des Hohlprofils 2 und damit mit der Ladebordwand 1. Beide Oberflächen 28 und 9 sind mit Querleisten 29 versehen, die ein Befahren des Hohlprofils 2 und damit der Ladebordwand 1 erleichtern sollen.

In das Hohlprofil 2 ist ferner ein Einsatz 30 eingesetzt, welcher als Auflage für die Sicherungsklappe 19 zum einen und für die Armen 21 zum anderen dienen soll. Der Einsatz 30 ist im vorderen Bereich mittels einer Niete 31 mit dem Hohlprofil 2 verbunden und weist ein Dämpfungselement 32 auf. Das Dämpfungselement 32 erstreckt sich bevorzugt unterhalb der gesamten Breite der Sicherungsklappe 19 und soll ein Schliessen der Sicherungsklappe 19 dämpfen.

Da eine Oberfläche 33 des Einsatzes 30 in dem Hohlprofil 2 schräg nach unten verläuft, entsteht zwischen der Oberfläche 33 des Einsatzes 30 und einer Unterfläche 34 der Sicherungsklappe 19 ein Zwischenraum 35. In diesen Zwischenraum 35 kommen in geschlossenem Zustand die Arme 21 zu liegen.

Damit sich die Welle 12 und damit auch die Arme 21 und die Sicherungsklappe 19 verdrehen lassen, ist, wie in Figur 4 dargestellt, ein Betätigungshebel 36 vorgesehen, welcher einends der Welle 12 befestigt ist.

Der Betätigungshebel 36 weist einen Schaft 37 mit einem Aussengewinde 38 auf. Das Aussengewinde 38 wird in eine Bohrung 39 der Welle 12 eingeschraubt, welche mit einem entsprechenden Innengewinde 40 versehen ist.

Auf den Schaft 37 ist ferner eine Kontermutter 41 aufgeschraubt, welche eine Höhenverstellung des Betätigungshebels 36 ermöglicht, ohne dass dieser sich aus der Bohrung 39 der Welle 12 selbsttätig herausdrehen kann.

Zur besseren Handhabung des Betätigungshebels 36 dient ein Knauf 42, welcher einends des Schaftes 37 angeordnet ist.

Damit sich der Betätigungshebel 36 in dem Hohlprofil 2 bewegen lässt, ist in dem Hohlprofil 2 eine Aussparung 43 vorgesehen.

Die Funktionsweise der vorliegenden Erfindung ist folgende:

Bei einem Befahren der Ladebordwand 1 befindet sich der Betätigungshebel 36 in der in Figur 4 dargestellten Position. In dieser Position befindet sich die Sicherungsklappe 19 in Schliesslage und ihre Oberfläche 28 bildet mit der Oberfläche 9 der Ladebordwand 1 eine Ebene.

Gegenstände, insbesondere Container, können nun leicht darüber gerollt werden.

Die Arme 21 befinden sich in ihrer Ausgangsstellung in dem *Zwischenraum 36 zwischen dem Einsatz 30 und der* Sicherungsklappe 19 und auch die Welle 12 befindet sich in ihrer Ausgangsstellung. D. h. die Rastausnehmung 13 der Welle 12 steht in Eingriff mit der federgelagerten Kugel 15 in der Kugelaufnahme 14.

Soll nun ein Gegenstand gegen ein Abrollen gesichert werden, so wird er zunächst auf die Ladebordwand 1 gerollt und vor den Sicherungsklappen 19 zum Stehen gebracht. Anschliessend wird der Betätigungshebel 36 um bevorzugt 90° in Pfeilrichtung gedreht. Dadurch dreht sich auch die Welle 12. Beim Drehen der Welle 12 gelangt die Rastausnehmung 13 aus dem Eingriff mit der federgelagerten Kugel 15. Die Kugel 15 rollt nun auf die Oberfläche der Welle 12 und gelangt erst wieder in Eingriff mit der Rastausnehmung 13 der Welle 12, wenn die Welle 12 mittels des Betätigungshebels 36 in die ursprüngliche Position gedreht wird.

Durch die Drehung der Welle 12 drehen sich auch die Arme 21. Die Arme 21 drücken gegen die Unterfläche 34 der Sicherungsklappe 19 und drehen diese ebenfalls um bevorzugt 90°.

In dieser Position angelangt, tritt die Rasteinrichtung in Kraft, d.h. die Querleiste 23 liegt in der Nut 22 und die Sicherungsklappe 19 kann selbständig nicht mehr in ihre Schliesslage klappen.

Nachdem die Sicherungsklappen 19 in ihren Öffnungslagen festgelegt sind, wird der Betätigungshebel 36 wieder in seine ursprüngliche Position zurückgedreht und mit ihm die Welle 12 und die daran angeordneten Arme 21, die dann wieder in dem Zwischenraum 35 auf dem Einsatz 30 aufliegen.

Ein sich auf der Ladebordwand 1 befindender Gegenstand kann nun mit seinen Rollen od. dgl. in die sich durch das Öffnen der Sicherungsklappe 19 bildende Mulde der Abrollsicherung einfahren und steht dort auf dem Einsatz 30 auf, wobei er sich gegen die Breite der Sicherungsklappe 19 abstützt und diese somit nicht überfahren kann.

Sollte es nun erwünscht sein, einzelne Sicherungsklappen 19 doch geschlossen zu halten, während andere Sicherungsklappen 19 geöffnet sind, so muss lediglich die jeweilige Rasteinrichtung 22/23 gelöst werden. Es genügt hierzu ein leichter Druck auf die Oberfläche 28 der Sicherungsklappe 19 selbst, um die Nut 22 von der Querleiste 23 zu lösen und die Sicherungsklappe 19 somit nach unten klappen zu lassen.

### Positionszahlenliste

| | | | | | |
|---|---|---|---|---|---|
| 1 | Ladebordwand | 34 | Unterfläche | 67 | |
| 2 | Hohlprofil | 35 | Zwischenraum | 68 | |
| 3 | Einsatz | 36 | Betätigungshebel | 69 | |
| 4 | Schraube | 37 | Schaft | 70 | |
| 5 | | 38 | Aussengewinde | 71 | |
| 6 | | 39 | Bohrung | 72 | |
| 7 | | 40 | Innengewinde | 73 | |
| 8 | | 41 | Kontermutter | 74 | |
| 9 | Oberfläche | 42 | Knauf | 75 | |
| 10 | Querbohrung | 43 | Aussparung | 76 | |
| 11 | Abschnitt | 44 | | 77 | |
| 12 | Welle | 45 | | 78 | |
| 13 | Rastausnehmung | 46 | | 79 | |
| 14 | Kugelaufnahme | 47 | | | |
| 15 | Kugel | 48 | | | |
| 16 | Feder | 49 | | 20.1 | Griffschenkel |
| 17 | Abschnitt | 50 | | 20.2 | Griffschenkel |
| 18 | Ausnehmung | 51 | | | |
| 19 | Sicherungsklappe | 52 | | | |
| 20 | Griffstück | 53 | | | |
| 21 | Arme | 54 | | | |
| 22 | Nut | 55 | | | |
| 23 | Querleiste | 56 | | | |
| 24 | | 57 | | | |
| 25 | | 58 | | | |
| 26 | | 59 | | | |
| 27 | | 60 | | | |
| 28 | Oberfläche | 61 | | | |
| 29 | Querleisten | 62 | | | |
| 30 | Einsatz | 63 | | | |
| 31 | Niete | 64 | | | |
| 32 | Dämpfungselem. | 65 | | | |
| 33 | Oberfläche | 66 | | | |

## Patentansprüche

1. Vorrichtung zum Sichern von Gegenständen auf einer Tragfläche, insbesondere einer Ladebordwand (1), mit zumindest zwei um eine Welle (12) drehbaren Sicherungsklappen (19),
**dadurch gekennzeichnet,**
**dass** den Sicherungsklappen (19) eine Einrichtung zugeordnet ist, welche das Schliessen einer einzelnen Sicherungsklappe (19) unabhängig von der anderen Sicherungsklappe (19) ermöglicht.

2. Vorrichtung nach Anspruch 1, **dadurch gekennzeichnet, dass** die Sicherungsklappen (19) durch die Welle (12) in Öffnungslage drehbar sind, dann aber unabhängig von der Welle (12) in der Öffnungslage haltbar sind.

3. Vorrichtung nach Anspruch 2, **dadurch gekennzeichnet, dass** den Sicherungsklappen (19) in der Öffnungslage eine Rasteinrichtung (22, 23) zugeordnet ist.

4. Vorrichtung nach Anspruch 3, **dadurch gekennzeichnet, dass** die Sicherungsklappe (19) eine Nut (22) oder Mulde aufweist, welche in Öffnungslage mit einer Querleiste (23) oder Kugel in dem Boden eines Hohlprofils (2) der Ladebordwand (1) zusammenwirkt oder umgedreht.

5. Vorrichtung nach wenigstens einem der Ansprüche 1 bis 4, **dadurch gekennzeichnet, dass** mit der Welle (12) ein Arm (21) verbunden ist.

6. Vorrichtung nach Anspruch 5, **dadurch gekennzeichnet, dass** der Arm (21) die Sicherungsklappe (19) untergreift.

7. Vorrichtung nach Anspruch 1 bis 6, **dadurch gekennzeichnet, dass** die Welle (12) in einer Ausnehmung (18) eines Griffstückes (20) gelagert ist.

8. Vorrichtung nach Anspruch 7, **dadurch gekennzeichnet, dass** das Griffstück (20) einends der Sicherungsklappe (19) angeformt ist.

9. Vorrichtung nach Anspruch 7 oder 8, **dadurch gekennzeichnet, dass** das Griffstück (20) die Welle (12) mit zwei Griffschenkeln (20.1, 20.2) nicht vollständig umschliesst.

10. Vorrichtung nach wenigstens einem der Ansprüche 1 bis 9, **dadurch gekennzeichnet, dass** ein Abschnitt (11) der Welle (12) in einem Einsatz (3) gelagert ist.

11. Vorrichtung nach Anspruch 10, **dadurch gekennzeichnet, dass** die Welle (12) in dem Abschnitt (11) eine Rastausnehmung (13) aufweist.

12. Vorrichtung nach Anspruch 11, **dadurch gekennzeichnet, dass** die Rastausnehmung (13) mit einer bevorzugt federgelagerten Kugel (14) zusammenwirkt.

13. Vorrichtung nach wenigstens einem der Ansprüche 1 bis 12, **dadurch gekennzeichnet, dass** der Welle (12) ein Hebel (36) zum Drehen der Welle (12) zugeordnet ist.

14. Vorrichtung nach Anspruch 13, **dadurch gekennzeichnet, dass** der Hebel (36) neben einer der Sicherungsklappen (19) in der Tragfläche versenkbar angeordnet ist.

15. Vorrichtung nach wenigstens einem der Ansprüche 1 bis 14, **dadurch gekennzeichnet, dass** in der Tragfläche ein Einsatz (30) als Auflage für die Sicherungsklappen (19) angeordnet ist.

16. Vorrichtung nach Anspruch 15, **dadurch gekennzeichnet, dass** dem Einsatz (30) ein Dämpfungselement (32) zum Dämpfen der Sicherungsklappen (19) zugeordnet ist.

17. Vorrichtung nach Anspruch 15 oder 16, **dadurch gekennzeichnet, dass** sich zwischen einer Oberfläche (33) des Einsatzes (30) und einer Unterfläche (34) der Sicherungsklappe (19) ein Zwischenraum (35) bildet, welcher in Schliesslage der Aufnahme des Armes (21) dient.
